# EUROPÄISCHE PATENTSCHRIFT

(11) **EP 0 552 691 B1**
(45) Veröffentlichungstag und Bekanntmachung des Hinweises auf die Patenterteilung: **06.12.1995**
(21) Anmeldenummer: 93100612.6
(22) Anmeldetag: 16.01.1993
(51) Int. Cl.: E04F 17/02, F16L 39/00

(54) **Bausystem zum Erstellen von doppelwandigen Schornsteinen sowie Abgas- und Abdampfleitungen**
Construction system for realizing double-walled chimneys as well as ducts for exhaust of gases and steam
Système de construction pour réaliser des cheminées à double paroi ainsi que des conduits pour l'échappement des gaz de la vapeur

(30) Priorität: 23.01.1992 DE 4201703
(43) Veröffentlichungstag der Anmeldung: 28.07.1993
(73) Patentinhaber: BERTRAMS AKTIENGESELLSCHAFT, 57069 Siegen (DE)
(72) Erfinder: Krekel, Klaus Peter, W-5900 Siegen (DE); Jung, Karl, W-5908 Neunkirchen (DE)
(74) Vertreter: Pürckhauer, Rolf, Dipl.-Ing.

(56) Entgegenhaltungen:
- EP-A- 0 442 457
- EP-A- 0 443 223
- CH-A- 678 443
- DE-A- 3 530 859
- US-A- 4 160 559
- US-A- 4 731 967

## Beschreibung

Die Erfindung betrifft ein Bausystem zum Erstellen von doppelwandigen Schornsteinen sowie Abgas- und Abdampfleitungen in Elementbauweise, bestehend aus Verlängerungsrohrstücken, Anschlußrohrstücken, Reinigungsrohrstücken und Sockelelementen mit an einen Abgaserzeuger anschließbaren Innenrohren aus einem gegen die Schadstoffe in den Abgasen und Dämpfen resistenten Material sowie Außenrohren aus Edelstahl, wobei die verschiedenen Rohrstücke und die Sockelelemente durch Steckkupplungen miteinander verbindbar sind und einen Mantelraum zur Hinterlüftung des durchgehenden Innenrohres oder zur Zuführung von Verbrennungsluft zu einem Brennaggregat bilden.

Die gesetzlichen Umweltschutzvorschriften, die den zulässigen Ausstoß von Schadstoffen, insbesondere von Kohlendioxid und Schwefel in die freie Atmosphäre durch mit Kohle, Gas und Mineralöl betriebene Brennanlagen auf ein Minimum begrenzen, haben zur Entwicklung von neuen Verbrennungstechniken und entsprechenden Brennaggregaten geführt. Die mit der Brennwerttechnik entwickelten, vorzugsweise mit Gas betriebenen Brennwertkessel erbringen durch die teilweise Nutzung der Kondensationswärme des bei der Verbrennung gebildeten Wasserdampfes und durch die fast vollständige Ausschöpfung der fühlbaren Wärme, d.h. der herkömmlichen Abgasverluste, einen erheblichen Energiegewinn gegenüber den konventionellen Heizkesseln. Die mit der Brennwerttechnik betriebene Nutzung der Abgaswärme führt zu einer Reduzierung der Abgastemperaturen auf bis zu 60°C, die im Vergleich mit den bei 160-180°C liegenden Abgastemperaturen herkömmlicher Heizkessel wesentlich niedriger sind. Mit der Unterschreitung des Taupunktbereiches bei den Abgasen von Brennwertkesseln tritt das Problem der verstärkten Kondensatbildung auf. In den unter Überdruck stehenden Abgasleitungen von mit Kohle und Öl betriebenen Brennwert-, Heiz- und Verbrennungsanlagen fällt schweflige Säure an,die eine verstärkte Korrosionsbeanspruchung der Abgasleitungen bedingt.

Innen- und Außenrohr der Verlängerungsrohrstücke, Anschlußrohrstücke, Reinigungsrohrstücke und Sockelelemente des gattungsgemäßen Bausystems zum Erstellen doppelwandiger Schornsteine nach der CH-A-678 443 sind jeweils zu Bauelementen zusammengesetzt, die mittels Steckverbindungen zusammengefügt werden. Die Innenrohre der einzelnen Rohrstücke weisen ein über das Rohrstück verlängertes Stutzenende mit einem aufgezogenen Zentrierring mit an dessen Umfang angeformten Radialrippen sowie ein als Kupplungsmuffe ausgebildetes Ende auf, und das konzentrisch zum Muffenende des Innenrohres der Rohrstücke angeordnete Ende des Außenrohres ist ebenfalls als Kupplungsmuffe ausgebildet. Beim Zusammenfügen zweier Rohrstücke wird das vorstehende Ende des Innenrohres mit den radialen Zentrierrippen des einen Rohrstückes in die Muffenenden des Innen- und des Außenrohres des anderen Rohrstückes eingesteckt.

Die Montage eines Schornsteins mit einteiligen Rohrstücken ist aufwendig. Ferner können durch die feste Verbindung zwischen Innen- und Außenrohr der verschiedenen Rohrstücke bei einer unterschiedlichen Erwärmung von Innen- und Außenrohr im Betrieb Spannungsrisse in den Rohren auftreten, so daß eine ordnungsgemäße Betriebsweise des Schornsteins nicht mehr gewährleistet ist.

Der Erfindung liegt die Aufgabe zugrunde, ein Bausystem zum Erstellen von doppelwandigen Abgasleitungen zu entwickeln, die als mit Unterdruck betriebene Schornsteine bei herkömmlichen Feuerstätten mit hohen Abgastemperaturen bis zu 250°C und als Überdruck-Abgasleitungen für Brennwert-, Heiz- und Verbrennungsanlagen mit niedrigen Abgastemperaturen bis zu 60°C eingesetzt werden können.

Diese Aufgabe ist erfindungsgemäß gelöst durch ein Bausystem mit den Merkmalen des Patentanspruches 1.

Die Unteransprüche sind auf zweckmäßige Ausgestaltungen des Bausystems gerichtet.

Das erfindungsgemäße Bausystem zeichnet sich durch folgende Vorteile aus:

Das Bausystem benötigt lediglich vier Hauptbauelemente, und zwar Verlängerungsrohrstücke, Anschlußrohrstücke, Reinigungsrohrstücke und Sockelelemente mit Innenrohren aus einem glasfaserverstärkten, bruchfestem, säurebeständigem Kunststoff wie Polyamid, die eine mit Glasfasern angereicherte Außenzone aufweisen, sowie mit Außenrohren aus Edelstahl. Die mit kurzen Glasfasern angereicherte Außenzone verleiht den Innenrohren aus Kunststoff eine hohe mechanische Festigkeit sowie eine gesteigerte Wärmefestigkeit bei Abgastemperaturen bis zu 250°C, so daß das Bausystem keine Kompensatoren zum Ausgleich von Wärmedehnungen erfordert. Die Kunststoff-Innenrohre der Verlängerungs-, Anschluß- und Reinigungsrohrstücke können mit Hilfe von abgedichteten Verbindungsmuffen aus Kunststoff auf einfache Weise zu einem längeren Abgasrohr zusammengesteckt werden. Ebenso einfach werden die Edelstahl-Außenrohre der Rohrstücke im Bereich der Verbindungsstellen der Innenrohre mit den Rohrenden zusammengesteckt und durch Klemmbänder zu einem selbsttragenden durchgehenden Außenrohr verbunden, das die an einer Außenfassade eines Gebäudes angelehnte Aufstellung des doppelwandigen Rohres als Kamin oder Abgas- und Abdampfleitung ermöglicht. Die als Kunststoffspritzteile gefertigten Verbindungsmuffen für die Innenrohre der Verlängerungs-, Reinigungs- und Anschlußrohrstücke weisen äußere Längsrippen zum Distanzieren der Außen- und Innenrohre auf, so daß keine gesonderten Distanzstücke erforderlich sind. Die aus einzelnen Rohrstücken erstellbaren doppelwandigen Abgasrohre können als Unterdruck-Schornsteine für Abgase mit hohen, eine Kondensatbildung vermeidenden Abgastemperaturen bis 250°C an Feuerstätten konventioneller Bauart und als Überdruck-Abgasleitungen mit vermehrter Kondensatbildung an Brennwert- und Teilkondensatheizkesseln mit niedrigen Abgastemperaturen bis 60°C angeschlossen werden, wobei bei Brennwert- und Teilkondensatheizkesseln die Abgase wegen des unzureichenden Auftriebs mittels eines an den Abgasaustrittsstutzen des Kessels angeschlossenen Gebläses durch die Abgasleitung ins Freie gefördert werden. Bei Brennwert- und Teilkondensatkesseln besteht die Möglichkeit, lediglich das Kunststoff-Innenrohr als Abgasleitung in einen vorhandenen Schornsteinschacht unter der Voraussetzung einzubauen, daß der Schacht einen größeren Querschnitt aufweist und be- und entlüftet wird.

Die in Elementbauweise erstellbaren doppelwandigen Abgasrohre eignen sich für den Einsatz in LAS-Heizsystemen, bei denen Verbrennungsluft von oben durch den Mantel- bzw. Ringraum zwischen Außen- und Innenrohr durch die Feuerstätte selbsttätig angesaugt und durch die in Gegenrichtung durch das Innenrohr nach oben strömenden Abgase vorgewärmt wird, so daß ein höherer feuerungstechnischer Wirkungsgrad erzielt wird. Ferner können die Abgasrohre in HRA-Heizsystemen Verwendung finden, bei denen Heizraumabluft durch eine unter der Heizraumdecke befindliche Ableitung in den Mantelraum des doppelwandigen Abgasrohres eingeleitet wird, diesen aufgrund des natürlichen Auftriebs von unten nach oben durchströmt und aus dem oben offenen Mantelraum in die Atmosphäre austritt, wobei die durch das Innenrohr nach oben strömenden heißen Abgase durch die Heizraumluft im Mantelraum gekühlt werden. Schließlich bietet sich als weiteres Einsatzgebiet für die in Elementbauweise erstellbare doppelwandige Leitung mit einem Kunststoff-Innenrohr und einem Außenrohr aus Edelstahl die Lüftungs- und Klimatechnik an.

Aus der EP-A-0 442 457 sind einwandige Schornsteine aus Ziegelwerk, Stahlbeton oder Stahl mit einem Innenliner aus einem wärmeformbeständigen Kompositkunststoff bekannt, der aus einem dünnwandigen Innenrohr aus einem Thermoplast mit einer Wandstärke von ungefähr einem Millimeter und einem Mantel aus glasfaserverstärkten Thermoplasten oder ungesättigten Duroplasten besteht.

Der EP-A-0 442 457 ist kein Hinweis zu entnehmen, bei einem Bausystem zum Erstellen doppelwandiger Schornsteine gemäß der Erfindung die Innenrohre der Verlängerungsrohrstücke, Anschlußrohrstücke, Reinigungsrohrstücke und Sockelelemente aus einem homogenen, glasfaserverstärkten Kunststoff herzustellen, wobei die Außenzone der Rohre mit Glasfasern angereichert ist und die Innenrohre der einzelnen Rohrstücke und des Sockelelementes bei der Montage eines Schornsteines durch gesonderte, abdichtbare Rohrmuffen aus Kunststoff zu verbinden.

Die Erfindung ist nachstehend anhand von Zeichnungen erläutert. Es zeigen
- Fig. 1: eine perspektivische Darstellung eines mit dem erfindungsgemäßen Bausystem errichteten Schornsteins,
- Fig. 2: eine ausschnittsweise, vergrößerte Längsschnittdarstellung des Schornsteins nach Fig. 1 und
- Fig. 3: einen Querschnitt des Schornsteins nach Linie III-III der Fig. 2.

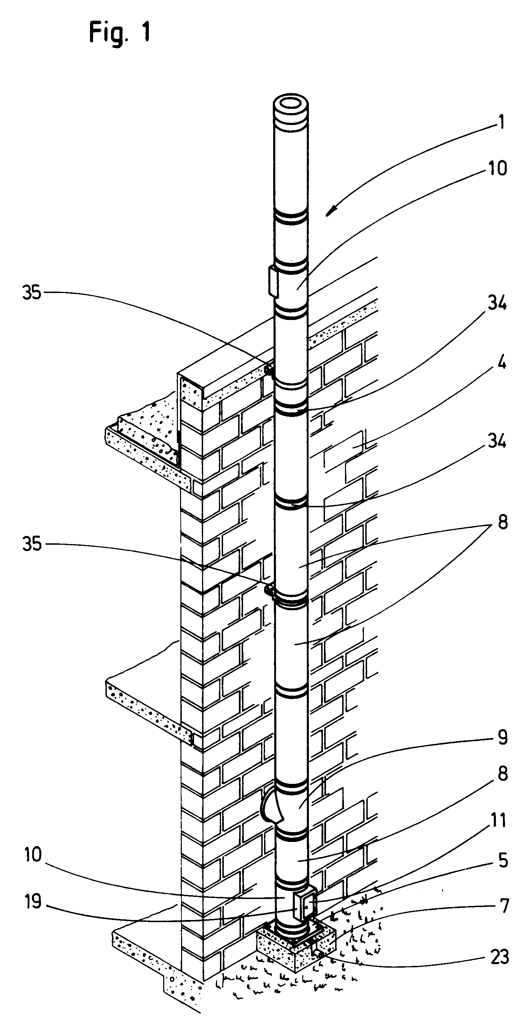

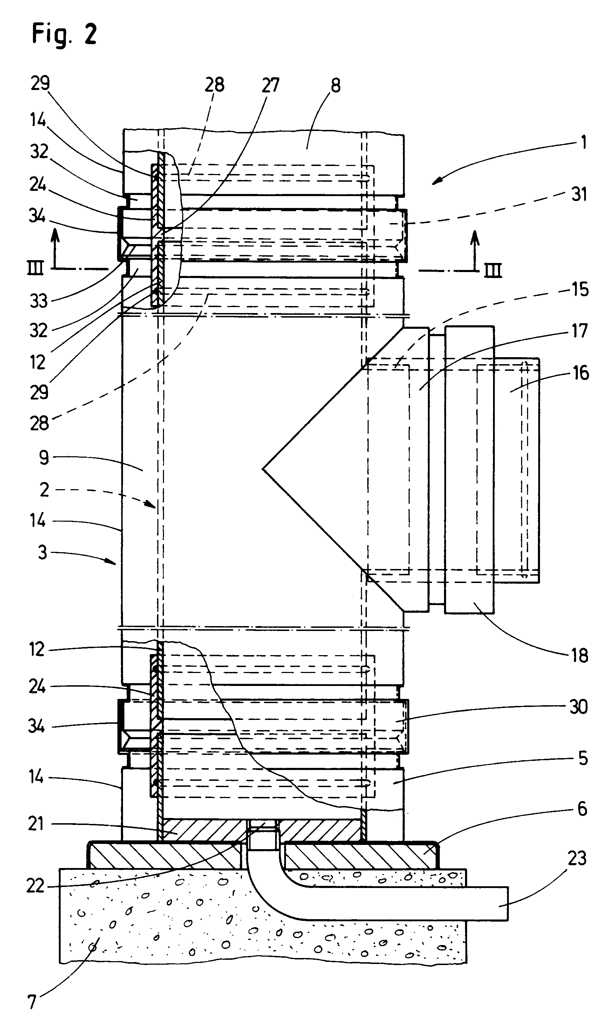

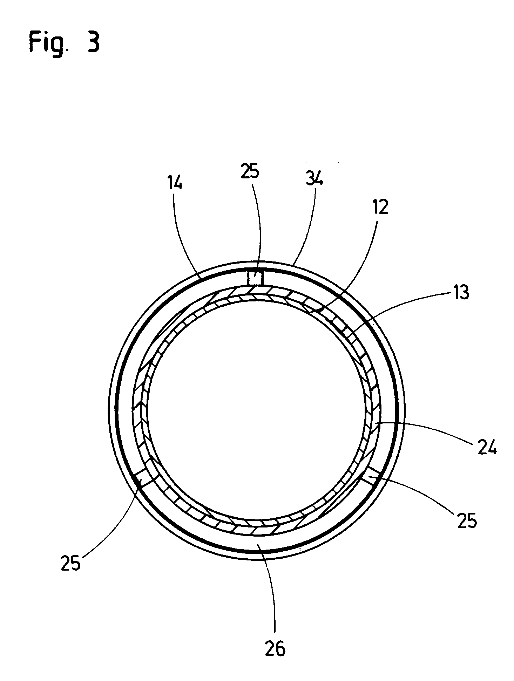

Der für die vorbeschriebenen Einsatzgebiete bestimmte doppelwandige Schornstein 1 nach den Fign. 1 bis 3 mit einem Innenrohr 2 aus Kunststoff und einem selbsttragenden Außenrohr 3 aus Edelstahl, der an der Außenwand 4 eines Gebäudes verankert ist, ist aus einem Sockelelement 5, das mittels einer Verankerungsplatte 6 auf einem gemauerten Fundamentsockel 7 oder einem Betonsockel befestigt ist, Verlängerungsrohrstücken 8, einem Anschlußrohrstück 9 für die Abgasleitung eines Heizkessels und zwei Reinigungsrohrstücken 10 im oberen und unteren Bereich des Schornsteins mit durch Klappen 11 verschließbaren Zugangsöffnungen errichtet.

Sockelelement 5, Verlängerungsrohrstücke 8, Anschlußrohrstück 9 und Reinigungsrohrstücke 10 bestehen aus Innenrohren 12 aus einem glasfaserverstärkten, hochfesten Kunststoff wie Polyamid, die eine mit kurzen Glasfasern angereicherte Außenzone 13 aufweisen, sowie Außenrohren 14 aus Edelstahl.

Die Kunststoff-Innenrohre 12 und die Außenrohre 14 aus Edelstahl des Sockelelementes 5 und der Verlängerungsrohrstücke 8 sind als Durchgangsrohre ausgebildet.

Die Anschlußrohrstücke 9 in Form von T-Stücken weisen ein Kunststoff-Innenrohr 12 mit einem angeschweißten Anschlußstutzen 15 für ein aufzuklebendes Rohrstück 16 aus Kunststoff zum Anschließen des Abgasrohres eines Brennaggregates und ein Edelstahl-Außenrohr 14 mit einem koaxial zum Stutzen 15 des Innenrohres 12 angeordneten Rohrstutzen 17 mit einem als Rohrmuffe ausgebildeten Ende 18 zum Anschließen eines Verbindungsrohres oder Aufsetzen eines Verschlußdeckels auf.

Die als T-Stücke ausgebildeten Reinigungsrohrstücke 10 haben im Unterschied zu den Anschlußrohrstücken 9 einen an das Edelstahl-Außenrohr 14 angeschweißten Stutzen 19 mit einem Rechteckquerschnitt, der durch eine Klappe 11 verschließbar ist und im oberen Abschnitt des Schornsteins 1 zum Einführen eines Kaminbesens in das Innenrohr 2 und bei einem Anschluß an das Sockelelement 5 zur Entnahme des mit dem Kaminbesen entfernten Rußes und anderer Verunreinigungen dient.

Das Sockelelement 5 weist eine Fußplatte 21 aus Kunststoff mit einer mittigen Öffnung 22 auf, an die ein durch den Fundamentsockel 7 geführtes Rohr 23 zur Entnahme von Regenwasser und Kondensat aus den Abgasen angeschlossen ist.

Die Innenrohre 12 des Sockelelementes 5, der Verlängerungsrohrstücke 8, des Anschlußrohrstückes 9 und der beiden Reinigungsrohrstücke 10 sind mittels Rohrmuffen 24 aus Kunststoff, z.B. Polyamid, zu dem durchgehenden Innenrohr 2 zusammengesteckt. Die als Kunststoff-Spritzteile hergestellten Rohrmuffen 24 weisen äußere Längsrippen 25 auf, durch die die Innenrohre 12 und Außenrohre 14 des Sockelelementes 5 sowie der Rohrstücke 8 - 10 distanziert werden, so daß das Innenrohr 2 und das Außenrohr 3 des Schornsteins 1 einen Mantelraum 26 bilden. Die Rohrmuffen 24 weisen einen mittigen, inneren Ringansatz 27 als Anschlag für die Enden zweier eingesteckter Innenrohre 12 sowie Ringnuten 28 in den Endbereichen zur Aufnahme von Dichtringen 29 zur Abdichtung der Innenrohre 12 auf.

Die Enden 30, 31 der Außenrohre 14 aus Edelstahl des Sockelelementes 5, der Verlängerungsrohrstücke 8, des Anschlußrohrstückes 9 sowie der beiden Reinigungsrohrstücke 10 bilden durch äußere Ringnuten 32 abgesetzte, gleich lange Kupplungsteile einer Rohrkupplung. Das eine Ende 30 der Außenrohre 14 aus Edelstahl der Rohrstücke 5, 8 - 10 ist als Kupplungsmuffe und das andere Ende 31 der Außenrohre 14 als Einsteckende ausgebildet, das durch eine Umfangssicke 33 versteift ist, und die in Höhe einer Rohrmuffe 24 zur Verbindung zweier Kunststoff-Innenrohre 12 zusammengesteckten Enden 30, 31 zweier Außenrohre 14 sind durch ein Klemmband 34 zusammengehalten, das sich in die an die Kupplungsenden 30, 31 der beiden Außenrohre 14 anschließenden Ringnuten 32 einlegt.

Der Schornstein 1, der beginnend mit einem Sockelelement 5 und einem Reinigungsrohrstück 10 in Elementbauweise aus Verlängerungsrohrstücken 8, einem Anschlußrohrstück 9 für eine Feuerstätte sowie einem weiteren Reinigungsrohrstück 10 erstellt wird, wird mit Haltern 35 an der Außenwand 4 befestigt.

Der Mantelraum 26 des doppelwandigen Schornsteins 1 kann, wie bereits erläutert, zum Ansaugen von Verbrennungsluft an ein Brennaggregat oder zum Abführen der Heizraumluft an eine unter der Heizraumdecke befindliche Abluftleitung angeschlossen werden.

## Patentansprüche

1. Bausystem zum Erstellen von doppelwandigen Schornsteinen sowie Abgas- und Abdampfleitungen in Elementbauweise, bestehend aus Verlängerungsrohrstücken (8), Anschlußrohrstücken (9), Reinigungsrohrstücken (10) und Sockelelementen (5), mit an einen Abgaserzeuger anschließbaren Innenrohren (12) aus einem gegen die Schadstoffe in den Abgasen und Dämpfen resistenten Material sowie Außenrohren (14) aus Edelstahl, wobei die verschiedenen Rohrstücke (8-10) und die Sockelelemente (5) durch Steckkupplungen miteinander verbindbar sind und einen Mantelraum (26) zur Hinterlüftung des durchgehenden Innenrohres (2) oder zur Zuführung von Verbrennungsluft zu einem Brennaggregat bilden, dadurch gekennzeichnet, daß die Innenrohre (12) der Verlängerungsrohrstücke (8), Anschlußrohrstücke (9), Reinigungsrohrstücke (10) und Sockelelemente (5) aus einem glasfaserverstärkten, hochfesten Kunststoff wie Polyamid bestehen, eine mit Glasfasern angereicherte Außenzone (13) aufweisen und durch gesonderte abdichtbare Rohrmuffen (24) aus Kunststoff verbunden sind, wobei die Rohrmuffen (24) äußere Längsrippen (25) zum Distanzieren der Außen- (14) und Innenrohre (12) und zum Zentrieren der Außenrohre (14) auf den Innenrohren (12) aufweisen.

2. Bausystem nach Anspruch 1, dadurch gekennzeichnet, daß die Anschlußrohrstücke (9) in Form von T-Stücken ein Kunststoff-Innenrohr (12) mit einem Anschlußstutzen (15) für ein Rohrstück (16) aus Kunststoff zum Anschließen des Abgasrohres eines Brennaggregates oder dgl. und ein Edelstahl-Außenrohr (14) mit einem koaxial zum Stutzen (15) des Innenrohres (12) angeordneten Rohrstutzen (17) mit einem als Rohrmuffe oder Einsteckende ausgebildeten Ende (18) zum Anschließen eines Verbindungsrohres oder Aufsetzen eines Verschlußdeckels bei einer Verwendung als Reinigungsrohrstück aufweisen.

3. Bausystem nach Anspruch 1 und 2, dadurch gekennzeichnet, daß die Enden (30, 31) der Außenrohre (14) aus Edelstahl der Verlängerungsrohrstücke (8), der Anschlußrohrstücke (9), der Reinigungsrohrstücke (10) und der Sockelelemente (5) durch äußere Ringnuten (32) abgesetzte, gleich lange Kupplungsteile einer Rohrkupplung bilden, das eine Ende (30) der Außenrohre (14) der Rohrstücke (5, 8 - 10) als Kupplungsmuffe und das andere Ende (31) der Außenrohre (14) der Rohrstücke als Einsteckende ausgebildet ist und daß die in Höhe einer Rohrmuffe (24) zur Verbindung zweier Innenrohre (12) miteinander gekuppelten Enden (30, 31) zweier Außenrohre (14) durch ein Klemmband (34) zusammengehalten sind, das sich in die an die Kupplungsenden (30, 31) der beiden Außenrohre (14) anschließenden Ringnuten (32) einlegt.

4. Bausystem nach Anspruch 3, dadurch gekennzeichnet, daß das Einsteckende (31) der Außenrohre (14) der Rohrstücke (5, 8 - 10) mindestens eine Umfangssicke (33) zur Versteifung aufweist.

5. Bausystem nach einem der Ansprüche 1 bis 4, dadurch gekennzeichnet, daß die Rohrmuffen (24) zur Verbindung der Innenrohre (12) der Rohrstücke (5, 8 - 10) einen mittigen, inneren Ringansatz (27) als Anschlag für die Enden zweier eingesteckter Innenrohre (12) sowie Ringnuten (28) in den Endbereichen zur Aufnahme von Dichtringen (29) aufweisen.

## Claims

1. Construction system for producing double-walled chimneys as well as gas and vapour flues of modular construction, consisting of extension pipe sections (8), connecting pipe sections (9), cleaning pipe sections (10) and base elements (5), with inner pipes (12) made of a material resistant to the noxious substances in the waste gases and vapours, which can be connected to a waste gas generator, as well as outer pipes (14) made of special steel, wherein the various pipe sections (8-10) and the base elements (5) can be connected to each other by socket-type couplings and form a casing chamber (26) for rear ventilation of the continuous inner pipe (2) or for the supply of air of combustion to a burner unit, characterised in that the inner pipes (12) of the extension pipe sections (8), connecting pipe sections (9), cleaning pipe sections (10) and base elements (5) are made of a glass fibre-reinforced, high-strength plastic such as polyamide, comprise an outer zone (13) enriched with glass fibres and are connected by separate sealable pipe sockets (24) made of plastic, wherein the pipe sockets (24) comprise outer longitudinal ribs (25) for spacing the outer (14) and inner (12) pipes and for centring the outer pipes (14) on the inner pipes (12).

2. Construction system according to claim 1, characterised in that the connecting pipe sections (9) in the form of T-sections comprise a plastic inner pipe (12) with a connecting piece (15) for a pipe section (16) made of plastic for connecting the waste gas pipe of a burner unit or the like and a special steel outer pipe (14) with a tubular connecting piece (17) arranged coaxially with the connecting piece (15) of the inner pipe (12), with an end (18) designed as a pipe socket or spigot for connecting a connecting pipe or mounting a closure cover in case of use as a cleaning pipe section.

3. Construction system according to claims 1 and 2, characterised in that the ends (30, 31) of the outer pipes (14) made of special steel of the extension pipe sections (8), of the connecting pipe sections (9), of the cleaning pipe sections (10) and of the base elements (5) form equal-length coupling portions of a pipe coupling reduced by outer annular grooves (32), one end (30) of the outer pipes (14) of the pipe sections (5, 8-10) is designed as a coupling socket and the other end (31) of the outer pipes (14) of the pipe sections is designed as a spigot, and in that the ends (30, 31) of two outer pipes (14) coupled together at the level of a pipe socket (24) for the connection of two inner pipes (12) are held together by a clamping band (34) which is laid in the annular grooves (32) adjoining the coupling ends (30, 31) of the two outer pipes (14).

4. Construction system according to claim 3, characterised in that the spigot (31) of the outer pipes (14) of the pipe sections (5, 8-10) comprises at least one circumferential bead (33) for reinforcement.

5. Construction system according to any of claims 1 to 4, characterised in that the pipe sockets (24) for connection of the inner pipes (12) of the pipe sections (5, 8-10) comprise a central, inner, annular attachment (27) as a stop for the ends of two inserted inner pipes (12) as well as annular grooves (28) in the end regions for receiving sealing rings (29).

## Revendications

1. Système de construction du type modulaire destiné à la réalisation de cheminées à double paroi ainsi que de conduits d'effluents gazeux et de vapeurs d'échappement, constitué de tronçons tubulaires de prolongation (8), de tronçons tubulaires de raccordement (9), de tronçons tubulaires de nettoyage (10) et d'éléments de socle (5), qui comportent des tubes intérieurs (12) en un matériau résistant aux substances polluantes contenues dans les effluents gazeux et les vapeurs, pouvant être raccordés à un générateur d'effluents gazeux, ainsi que des tubes extérieurs (14) en acier fin, les tronçons tubulaires (8 à 10) et les éléments de socle (5) pouvant être reliés entre eux par des accouplements emboîtables et formant un espace d'enveloppe (26) pour la ventilation du tube intérieur (2) le traversant ou pour l'amenée d'air de combustion à un groupe de combustion, caractérisé par le fait que les tubes intérieurs (12) des tronçons tubulaires de prolongation (8), des tronçons tubulaires de raccordement (9), des tronçons tubulaires de nettoyage (10) et des éléments de socle (5) sont réalisés en une matière plastique à haute résistance renforcée par des fibres de verre telle que du polyamide, comportent une zone extérieure (13) enrichie en fibres de verre, et sont reliés par des manchons tubulaires (24) distincts en matière plastique pouvant être rendus étanches, les manchons tubulaires (24) comportant des nervures longitudinales extérieures (25) pour maintenir écartés les tubes extérieurs (14) des tubes intérieurs (12), et pour centrer les tubes extérieurs (14) sur les tubes intérieurs (12).

2. Système de construction selon la revendication 1, caractérisé par le fait que les tronçons tubulaires de raccordement (9) en forme de T comportent un tube intérieur (12) en matière plastique avec une tubulure de raccordement (15) pour un tronçon tubulaire (16) en matière plastique destiné au raccordement du conduit d'effluents gazeux d'un groupe de combustion ou similaire, et un tube extérieur (14) en acier fin comportant une tubulure (17) disposée coaxialement à la tubulure (15) du tube intérieur (12), dont l'extrémité (18) est réalisée sous la forme d'un manchon tubulaire ou d'extrémité emboîtable destiné au raccordement d'un tube de liaison, ou à la mise en place d'un couvercle de fermeture dans le cas d'une utilisation en tant que tronçon tubulaire de nettoyage.

3. Système de construction selon les revendications 1 et 2, caractérisé par le fait que les extrémités (30, 31) des tubes extérieurs (14) en acier spécial des tronçons tubulaires de prolongation (8), des tronçons tubulaires de raccordement (9), des tronçons tubulaires de nettoyage (10) et des éléments de socle (5), forment par des rainures annulaires extérieures (32) des éléments de couplage en retrait de même longueur d'un couplage de tube, que l'une des extrémités (30) des tubes extérieurs (14) des tronçons tubulaires (5, 8 à 10) est conçue en tant que manchon d'accouplement et l'autre extrémité (31) des tubes extérieurs (14) des tronçons tubulaires en tant qu'extrémité emboîtable, et que les deux extrémités (30, 31) de deux tubes extérieurs (14), qui sont couplées entre elles au niveau d'un manchon tubulaire (24) pour relier deux tubes intérieurs (12), sont maintenues ensemble par une bande de serrage (34) qui s'insère dans les rainures annulaires (32) adjacentes aux extrémités de couplage (30, 31) des deux tubes extérieurs (14).

4. Système de construction selon la revendication 3, caractérisé par le fait que l'extrémité emboîtable (31) des tubes extérieurs (14) des tronçons tubulaires (5, 8 à 10) comporte au moins une moulure circonférentielle (33) de renforcement.

5. Système de construction selon l'une quelconque des revendications 1 à 4, caractérisé par le fait que les manchons tubulaires (24) destinés à la liaison des tubes intérieurs (12) des tronçons tubulaires (5, 8 à 10) comportent en leur milieu un épaulement annulaire intérieur (27) servant de butée aux extrémités de deux tubes intérieurs (12) emboîtés, ainsi que des rainures annulaires (28) dans leurs zones d'extrémité qui sont destinées à recevoir des bagues d'étanchéité (29).
